(19) Europäisches Patentamt
European Patent Office
Office européen des brevets

(11) EP 1 054 015 B1

(12) **FASCICULE DE BREVET EUROPEEN**

(45) Date de publication et mention de la délivrance du brevet:
**13.08.2003 Bulletin 2003/33**

(51) Int Cl.[7]: **C07F 7/18**, C08F 4/656, C08F 4/646, C08F 10/00

(21) Numéro de dépôt: **00109408.5**

(22) Date de dépôt: **03.05.2000**

(54) **Polymérisation des oléfines en présence de dialcoxysilacyclohexanes**

Olefinpolymerisation in Gegenwart von Dialcoxysilacyclohexanen

Olefin polymerisation in presence of dialkoxysilacyclohexanes

(84) Etats contractants désignés:
**AT BE CH CY DE DK ES FI FR GB GR IE IT LI LU MC NL PT SE**

(30) Priorité: **18.05.1999 FR 9906279**

(43) Date de publication de la demande:
**22.11.2000 Bulletin 2000/47**

(73) Titulaire: **Atofina**
**92800 Puteaux (FR)**

(72) Inventeurs:
- **Grison, Claude**
  **54500 Vandoeuvre les Nancy (FR)**
- **Batt-Coutrot, Delphine**
  **54600 Villers les Nancy (FR)**
- **Coutrot, Philippe**
  **54520 Saulxures les Nancy (FR)**
- **Saudemont, Thierry**
  **64110 Jurancon (FR)**
- **Malinge, Jean**
  **64300 Loubieng (FR)**

(56) Documents cités:
**EP-A- 0 765 881**

- **PATENT ABSTRACTS OF JAPAN vol. 1999, no. 12, 29 octobre 1999 (1999-10-29) & JP 11 199590 A (IDEMITSU PETROCHEM CO LTD), 27 juillet 1999 (1999-07-27) -& CHEMICAL ABSTRACTS, vol. 131, no. 11, 13 septembre 1999 (1999-09-13) Columbus, Ohio, US; abstract no. 144970, SADAJIMA: "Organosilicon compounds, olefin polymerization catalysts with high catalytic activity, and manufacture of highly stereoregualr polyolefins therewith" XP002142090**
- **NGUYEN, BINH T. ET AL: "A convenient synthetic route to methylated silacyclohexanes" J. ORG. CHEM. (1986), 51(12), 2206-10, XP000876591**

Il est rappelé que: Dans un délai de neuf mois à compter de la date de publication de la mention de la délivrance du brevet européen, toute personne peut faire opposition au brevet européen délivré, auprès de l’Office européen des brevets. L’opposition doit être formée par écrit et motivée. Elle n’est réputée formée qu’après paiement de la taxe d’opposition. (Art. 99(1) Convention sur le brevet européen).

EP 1 054 015 B1

Printed by Jouve, 75001 PARIS (FR)

## Description

L'invention concerne des dialcoxysilacyclohexanes, leur procédé de préparation et leur utilisation en tant que donneur d'électrons dans les procédés de polymérisation des oléfines comme le propylène ou l'éthylène.

Une polyoléfine présentant un trop fort taux de solubles dans l'heptane peut avoir tendance à coller, est donc difficile à convoyer, et est de ce fait peu adaptée aux applications industrielles. De plus, dans le domaine de l'alimentaire, la présence de solubles dans une polyoléfine destinée à entrer en contact avec des aliments, est jugée indésirable. Pour ces raisons, par exemple, le polypropylène isotactique présente de préférence un indice d'insolubilité dans l'heptane (représenté par HI de l'expression "heptane insoluble") supérieur à 80 % en poids, voire le plus élevé possible.

La demande de brevet EP 250229 enseigne que l'utilisation de certains silanes lors de la polymérisation d'oléfines permet de diminuer le taux de solubles dans l'hexane de la polyoléfine obtenue.

La demande de brevet EP 0765881 enseigne la préparation de certains alcoxysilacycloalcanes et leur utilisation pour la polymérisation d'oléfines.

L'article de Binh T. Nguyen et Frank K. Cartledge, J. Org. Chem. (1986) 51, 2206-2210 divulgue une méthode de synthèse de silacyclohexanes méthylés à partir de dibromoalcanes qui se distinguent de la présente invention en ce que l'atome de silicium des composés de la présente invention est substitué par deux groupements alcoxy.

L'article de R. West, Journal of the American Society (1954) 76, 6012 décrit un mode de préparation du 1,1-diméthoxysilacyclohexane. Cette préparation fait intervenir de nombreuses étapes et passe par la formation d'un chlorosilacycloalcane particulièrement délicat à manipuler et facilement dégradable.

Le procédé de préparation des dialcoxysilacyclohexanes de la présente invention est particulièrement simple, fait intervenir des matières premières faciles d'accès et relativement stables, et ne fait pas intervenir de chlorosilacycloalcane. La stabilité des produits mis en oeuvre limite les risques de réactions secondaires, ce qui va dans le sens d'une meilleure pureté des produits finalement préparés.

La présence de dialcoxysilacyclohexanes selon l'invention dans le milieu de polymérisation d'au moins une oléfine se traduit par une augmentation sensible de la productivité en polyoléfine et par une augmentation sensible du HI de ladite polyoléfine. De plus, le dialcoxysilacyclohexane joue un rôle de protecteur de morphologie dans les procédés de polymérisation en suspension et en phase gazeuse. Ceci signifie que, pour ces procédés dits hétérogènes, le polymère formé est une meilleure réplique morphologique de la composante catalytique solide de départ si un dialcoxysilacyclohexane est introduit dans le milieu de polymérisation comme donneur externe d'électrons.

L'invention concerne un procédé de polymérisation d'au moins une oléfine en présence d'un catalyseur et d'un dialcoxysilacyclohexane de formule

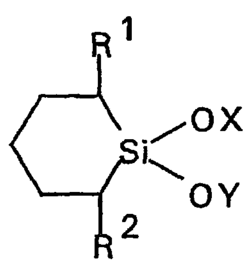

(1)

dans laquelle $R^1$ et $R^2$ pouvant être identiques ou différents représentent des radicaux alkyle comprenant 1 à 5 atomes de carbone, et X et Y, pouvant être identiques ou différents, sont des radicaux alkyle comprenant 1 à 6 atomes de carbone. $R^1$, $R^2$, X et Y peuvent être choisis parmi les radicaux méthyle, éthyle, n-propyle, isopropyle, n-butyle, tert-butyle, isobutyle. De préférence, au moins un radical parmi $R^1$ et $R^2$ est un radical éthyle. De manière encore préférée, $R^1$ et $R^2$ sont tous deux des radicaux éthyle.

La Demanderesse a constaté que la présence du dialcoxysilacyclohexane de formule (1) dans le milieu de polymérisation se traduisait par l'obtention d'un polymère à plus fort indice d'insolubilité dans l'heptane, et ce, avec généralement une plus forte productivité, en comparaison avec un procédé identique dans lequel le dialcoxysilacyclohexane serait remplacé par le même nombre de mole d'un dialcoxysilacyclohexane de structure identique sauf qu'au moins un des radicaux $R^1$ et $R^2$ serait remplacé par un atome d'hydrogène.

Les dialcoxysilacyclohexanes suivants peuvent être utilisés :

- 1,1diméthoxy-2,6-diméthylsilacyclohexane,
- 1,1 diméthoxy-2,6-diéthylsilacyclohexane,
- 1,1diméthoxy-2,6-di-n-propylsilacyclohexane,
- 1,1diméthoxy-2,6-diisopropylsilacyclohexane,

- 1,1diméthoxy-2,6-di-n-butylsilacyclohexane,
- 1,1diméthoxy-2-éthyl-6-méthylsilacyclohexane,
- 1,1diméthoxy-2-éthyl-6-n-propylsilacyclohexane,
- 1,1diméthoxy-2-éthyl-6-isopropylsilacyclohexane,
- 1,1 diméthoxy-2-n-butyl-6- éthylsilacyclohexane,
- 1,1diéthoxy-2,6-diméthylsilacyclohexane,
- 1,1diéthoxy-2,6-diéthylsilacyclohexane,
- 1,1diéthoxy-2,6-di-n-propylsilacyclohexane,
- 1,1 diéthoxy-2,6-diisopropylsilacyclohexane,
- 1,1diéthoxy-2,6-di-n-butylsilacyclohexane,
- 1,1diéthoxy-2-éthyl-6-méthylsilacyclohexane,
- 1,1diéthoxy-2-éthyl-6-n-propylsilacyclohexane,
- 1,1diéthoxy-2-éthyl-6-isopropylsilacyclohexane,
- 1,1diéthoxy-2-n-butyl-6-éthylsilacyclohexane,

Le 1,1-diméthoxy-2,6-diéthylsilacyclohexane est particulièrement préféré.

Le dialcoxysilacyclohexane sert de donneur d'électron lors de la polymérisation. Lorsque le catalyseur comprend une composante catalytique solide, par exemple de type Ziegler-Natta, le dialcoxysilacyclohexane peut être incorporé à l'intérieur de ladite composante solide et jouer le rôle de donneur interne d'électron.

Il est également possible de faire jouer au dialcoxysilacyclohexane le rôle de donneur externe d'électron de façon à diminuer le taux de solubles dans l'heptane du polymère finalement préparé. Dans ce dernier cas, le dialcoxysilacyclohexane peut être introduit dans le milieu de polymérisation indépendamment de la composante catalytique solide. Lorsque le système catalytique fait intervenir une composante catalytique solide et un cocatalyseur, il est également possible de réaliser un précontact entre la composante catalytique solide, le catalyseur et le dialcoxysilacyclohexane avant l'entrée dans le milieu de polymérisation.

Généralement, le dialcoxysilacyclohexane est introduit dans le milieu de polymérisation à raison de $1.10^{-4}$ à 0,2 millimole par mole d'oléfine à polymériser. Si le dialcoxysilacyclohexane a été préparé en présence d'un solvant à caractère basique au sens de Lewis, il est recommandé d'éliminer ce dernier avant l'étape de polymérisation car celui-ci peut avoir une influence indésirable sur la structure du polymère formé. Par contre, le dialcoxysilacyclohexane peut être introduit en présence par exemple d'un solvant hydrocarboné aliphatique, alicyclique ou aromatique sans caractère basique manifeste au sens de Lewis, ledit solvant pouvant par exemple être l'hexane, le cyclohexane ou le toluène.

Le catalyseur peut comprendre une composante catalytique solide, laquelle comprend généralement un composé d'un métal de transition.

Le métal de transition peut être choisi parmi les éléments des groupes 3b, 4b, 5b, 6b, 7b, 8, les lanthanides, les actinides, de la classification périodique des éléments, tels que définis dans le Handbook of Chemistry and Physics, soixante et unième édition, 1980-1981. Ces métaux de transition sont de préférence choisis parmi le titane, le vanadium, le hafnium, le zirconium ou le chrome.

La composante catalytique solide peut être de type Ziegler-Natta et par exemple se présenter sous la forme d'un complexe comprenant au moins les éléments Mg, Ti et Cl, le titane se trouvant sous forme chloré de $Ti^{IV}$ et/ou de $Ti^{III}$. La composante solide peut comprendre un donneur ou accepteur d'électron.

Une composante catalytique de type Ziegler-Natta est habituellement le résultat de la combinaison d'au moins un composé du titane, un composé du magnésium, de chlore et éventuellement un composé d'aluminium et/ou un donneur ou accepteur d'électrons ainsi que de tout autre composé utilisable dans ce type de composante.

Le composé du titane est choisi habituellement parmi les composés chlorés du titane de formule $Ti\text{-}(OR')_xCl_{4-x}$ dans laquelle R' représente un radical hydrocarboné aliphatique ou aromatique contenant de un à quatorze atomes de carbone, ou représente $COR^5$ avec $R^5$ représentant un radical hydrocarboné aliphatique ou aromatique contenant de un à quatorze atomes de carbone, et x représente un nombre entier allant de 0 à 3.

Le composé du magnésium est habituellement choisi parmi les composés de formule $Mg(OR^6)_nCl_{2-n}$ ou $MgR^6_nCl_{2-n}$, dans lesquelles $R^6$ représente l'hydrogène ou un radical hydrocarboné linéaire ou cyclique et n représente un nombre entier allant de 0 à 2.

Le chlore présent dans la composante de type Ziegler-Natta peut provenir directement de l'halogénure de titane et/ou de l'halogénure de magnésium. Il peut également provenir d'un agent chlorant indépendant tel que l'acide chlorhydrique ou un halogénure organique comme le chlorure de butyle ou $SiCl_4$.

Suivant la nature du métal de transition inclus dans la composante catalytique solide, il peut être nécessaire d'ajouter au milieu de polymérisation un cocatalyseur capable d'activer le métal de transition de la composante solide. Le catalyseur du procédé de polymérisation selon l'invention peut donc être un système catalytique à plusieurs composantes, comme l'association d'une composante catalytique solide et d'un cocatalyseur. Si le métal de transition est le titane, le cocatalyseur peut être choisi parmi les composés organiques de l'aluminium.

Ce composé organique de l'aluminium peut être de formule $R^7R^8R^9Al$ dans laquelle $R^7$, $R^8$ et $R^9$ pouvant être identiques ou différents, représentent chacun, soit un atome d'hydrogène, soit un atome d'halogène, soit un groupe alkyle contenant de 1 à 20 atomes de carbone, l'un au moins de $R^7$, $R^8$ ou $R^9$ représentant un groupe alkyle. A titre d'exemple de composé adapté, on peut citer le dichlorure ou dibromure ou dihydrure d'éthylaluminium, le dichlorure ou dibromure ou dihydrure d'isobutylaiuminium, le chlorure ou bromure ou hydrure de diéthylaluminium, le chlorure ou bromure ou hydrure de di-n-propylaluminium, le chlorure ou bromure ou hydrure de diisobutylaluminium. De préférence aux composés précités, on utilise un trialkylaluminium tel que le tri-n-hexylaluminium, le triisobutylaluminium, le triméthylaluminium, ou le triéthylaluminium.

Le cocatalyseur peut également être un aluminoxane. Cet aluminoxane peut être linéaire, de formule

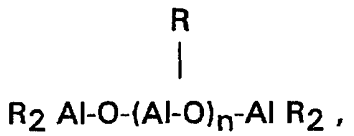

ou cyclique de formule

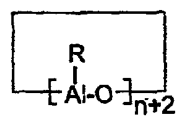

R représentant un radical alkyle comprenant de un à six atomes de carbone, et n étant un nombre entier allant de 2 à 40, de préférence de 10 à 20. L'aluminoxane peut comporter des groupements R de nature différente. De préférence, les groupements R représentent tous des groupements méthyle. Par ailleurs, par cocatalyseur, on entend également les mélanges des composés précités.

Les quantités de cocatalyseur utilisées doivent être suffisantes pour activer le métal de transition. Généralement, lorsqu'un dérivé organique de l'aluminium est utilisé comme cocatalyseur, on en introduit une quantité telle que le rapport atomique de l'aluminium apporté par le cocatalyseur sur le ou les métaux de transition que l'on souhaite activer aille de 0,5 à 10000 et de préférence de 1 à 1000.

Le procédé de polymérisation peut être mené en suspension, en solution, en phase gazeuse ou en masse.

Un procédé de polymérisation en masse consiste à réaliser une polymérisation dans l'une au moins des oléfines à polymériser maintenue à l'état liquide ou hypercritique.

Les procédés de polymérisation en solution ou en suspension consistent à réaliser une polymérisation en solution ou en suspension dans un milieu inerte et notamment dans un hydrocarbure aliphatique.

Pour un procédé de polymérisation en solution, on peut utiliser par exemple un hydrocarbure contenant de huit à douze atomes de carbone ou un mélange de ces hydrocarbures. Pour un procédé de polymérisation en suspension, on peut utiliser par exemple le n-heptane, le n-hexane, l'isohexane, l'isopentane ou l'isobutane.

Les conditions opératoires pour ces procédés de polymérisation en masse, en solution, en suspension ou en phase gazeuse sont celles qui sont habituellement proposées pour des cas similaires faisant appel à des systèmes catalytiques conventionnels de type Ziegler Natta supporté ou non.

Par exemple pour un procédé de polymérisation en suspension ou en solution, on peut opérer à des températures allant jusqu'à 250°C et sous des pressions allant de la pression atmosphérique à 250 bars. Dans le cas d'un procédé de polymérisation en milieu propylène liquide, les températures peuvent aller jusqu'à la température critique et les pressions peuvent être comprises entre la pression atmosphérique et la pression critique. Pour un procédé de polymérisation en masse conduisant à des polyéthylènes ou à des copolymères majoritaires en éthylène, on peut opérer à des températures comprises entre 130°C et 350°C et sous des pressions allant de 200 à 3500 bars.

Un procédé de polymérisation en phase gazeuse peut être mis en oeuvre à l'aide de tout réacteur permettant une polymérisation en phase gazeuse et en particulier dans un réacteur à lit agité et/ou à lit fluidisé.

Les conditions de mise en oeuvre de la polymérisation en phase gazeuse, notamment température, pression, injection de l'oléfine ou des oléfines dans le réacteur à lit agité et/ou à lit fluidisé, contrôle de la température et de la pression de polymérisation, sont analogues à celles proposées dans l'art antérieur pour la polymérisation en phase gazeuse des oléfines. On opère généralement à une température inférieure au point de fusion Tf du polymère ou prépolymère à synthétiser, et plus particulièrement comprise entre +20°C et (Tf-5)°C, et sous une pression telle que

l'oléfine ou les oléfines soient essentiellement en phase vapeur.

Les procédés de polymérisation en solution, en suspension, en masse, ou en phase gazeuse peuvent faire intervenir un agent de transfert de chaînes, de manière à contrôler l'indice de fusion du polymère à produire. Comme agent de transfert de chaîne, on peut utiliser l'hydrogène, que l'on introduit en quantité pouvant aller jusqu'à 90 % et se situant de préférence entre 0,01 et 60 % en mole de l'ensemble oléfine et hydrogène amené au réacteur.

Les oléfines pouvant être utilisées pour la polymérisation ou copolymérisation, sont par exemple les oléfines comportant de deux à vingt atomes de carbone et en particulier les alpha-oléfines de ce groupe. Comme oléfine, on peut citer l'éthylène, le propylène, le but-1-ène, le 4-méthyl-pent-1-ène, le oct-1-ène, le hex-1-ène, le 3-méthyl-pent-1-ène, le 3-méthyl-but-1-ène, le déc-1-ène, le tétradéc-1-ène, ou leur mélange.

Le procédé de polymérisation selon l'invention est particulièrement apte à diminuer le taux de solubles dans l'heptane de polymères lorsque le milieu de polymérisation comprend une oléfine comprenant au moins trois atomes de carbone. Ce procédé est donc particulièrement adapté à la polymérisation du propylène.

Le dialcoxysilacyclohexane peut être fabriqué par un procédé comprenant une étape A de réaction entre un dibromure d'alkylène dimagnésium de formule :

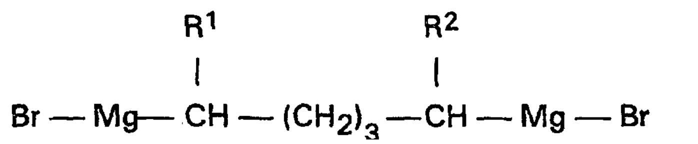 ,

$R^1$ et $R^2$ ayant les significations précédemment données, avec un tétraalcoxysilane de formule $(OR^a)(OR^b)(OR^c)(OR^d)$ Si, dans laquelle $R^a$, $R^b$, $R^c$ et $R^d$ sont choisis dans la même famille que X et Y, l'un au moins des radicaux $R^a$, $R^b$, $R^c$ et $R^d$ étant identique à X, et l'un au moins des radicaux $R^a$, $R^b$, $R^c$ et $R^d$ étant identique à Y. De préférence X et Y sont identiques, et dans ce cas, de préférence, $R^a$, $R^b$, $R^c$ et $R^d$ sont également tous identiques à X et Y.

Pour la réaction de cette étape A, on peut par exemple engager les réactifs de sorte que le rapport molaire du dibromure d'alkylène dimagnésium sur le tétraalcoxysilane aille de préférence de 1 à 3.

Cette réaction est de préférence réalisée en présence d'un solvant, lequel peut être un éther tel que l'éther diéthylique ou le tétrahydrofurane (THF), ledit solvant pouvant être introduit en quantité telle que la concentration totale en magnésium pendant toute la réaction soit comprise, de préférence, entre 0,05 et 1,2 mole par litre. Avant la réaction, les réactifs peuvent être mis, séparément, en solution dans le solvant, et introduits ainsi, en solution, dans le milieu réactionnel. Par exemple, avant de réagir, le dibromure d'alkylène dimagnésium peut être en solution dans le solvant à raison de 0,1 à 1,2 mole par litre, et le tétraalcoxysilane peut être en solution dans le solvant à raison de 0,1 mole par litre. Cette réaction peut par exemple être menée entre 30 et 70°C, le point d'ébullition du solvant pouvant cependant constituer une limite supérieure de température si la réaction est menée à la pression atmosphérique.

A titre d'exemple, le tableau 1 ci-dessous mentionne quelques dialcoxysilacyclohexanes qu'il est possible de préparer par réaction du tétraméthoxysilane avec le dibromure d'alkylène dimagnésium de formule

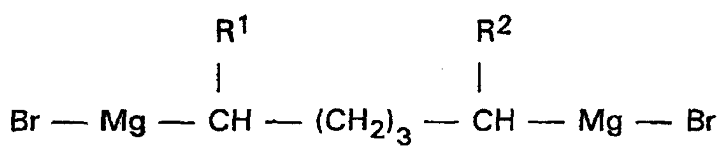

en fonction de la nature de $R^1$ et $R^2$ :

| $R^1$ | $R^2$ | Dialcoxysilacyclohexane formé |
|---|---|---|
| méthyle | méthyle | 1,1diméthoxy-2,6-diméthylsilacyclohexane, |
| éthyle | éthyle | 1,1diméthoxy-2,6-diéthylsilacyclohexane, |
| n-propyle | n-propyle | 1,1diméthoxy-2,6-di-n-propylsilacyclohexane, |
| isopropyle | isopropyle | 1,1diméthoxy-2,6-diisopropylsilacyclohexane, |
| n-butyle | n-butyle | 1,1diméthoxy-2,6-di-n-butylsilacyclohexane, |
| méthyle | éthyle | 1,1diméthoxy-2-éthyl-6-méthylsilacyclohexane, |
| éthyle | n-propyle | 1,1diméthoxy-2-éthyl-6-n-propylsilacyclohexane, |
| éthyle | isopropyle | 1,1diméthoxy-2-éthyl-6-isopropylsilacyclohexane, |
| éthyle | n-butyle | 1,1diméthoxy-2-n-butyl-6-éthylsilacyclohexane, |

A titre d'exemple, le tableau 2 ci-dessous mentionne quelques dialcoxysilacyclohexanes qu'il est possible de préparer par réaction du tétraéthoxysilane avec le dibromure d'alkylène dimagnésium de formule

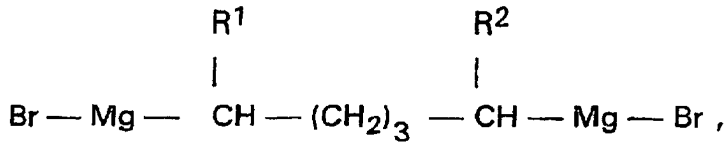

en fonction de la nature de $R^1$ et $R^2$ :

| $R^1$ | $R^2$ | Dialcoxysilacyclohexane formé |
|---|---|---|
| méthyle | méthyle | 1,1diéthoxy-2,6-diméthylsilacyclohexane, |
| éthyle | éthyle | 1,1diéthoxy-2,6-diéthylsilacyclohexane, |
| n-propyle | n-propyle | 1,1diéthoxy-2,6-di-n-propylsilacyclohexane, |
| isopropyle | isopropyle | 1,1diéthoxy-2,6-diisopropylsilacyclohexane, |
| n-butyle | n-butyle | 1,1diéthoxy-2,6-di-n-butylsilacyclohexane, |
| méthyle | éthyle | 1,1diéthoxy-2-éthyl-6-méthylsilacyclohexane, |
| éthyle | n-propyle | 1,1diéthoxy-2-éthyl-6-n-propylsilacyclohexane, |
| éthyle | isopropyle | 1,1diéthoxy-2-éthyl-6-isopropylsilacyclohexane, |
| éthyle | n-butyle | 1,1diéthoxy-2-n-butyl-6-éthylsilacyclohexane, |

La réaction entre le dibromure d'alkylène dimagnésium et le tétraalcocysilane engendre la formation de Br-MgOZ dans laquelle Z est un radical faisant partie du groupe des radicaux $R^a$, $R^b$, $R^c$ et $R^d$.

Ce BrMgOZ considéré comme un sous-produit dans le cadre de la présente invention, est généralement solide et peut dans ce cas, être éliminé, par exemple, par filtration. L'alcoxysilacycloalcane, après évaporation du solvant utilisé peut être purifié par distillation, de préférence sous pression réduite, par exemple comprise entre 1 et $1.10^3$ mbar.

Le dibromure d'alkylène dimagnésium peut être préparé par exemple, dans une étape B, par réaction entre un dibromoalcane de formule

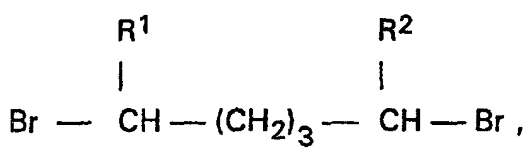

(dans laquelle $R^1$ et $R^2$ ont les précédentes significations) et du magnésium, généralement sous la forme de poudre ou de copeaux, en présence d'un solvant, par exemple un éther comme le diéthyléther, par exemple entre 0 et 50°C, le cas échéant sous pression si la volatilité des espèces mises en oeuvre le nécessite, compte tenu de la température choisie.

Pour la réaction de cette étape B, on peut engager les réactifs avec un rapport molaire du magnésium sur le dibromoalcane allant de préférence de 2 à 2,5, et la quantité de solvant peut être telle qu'en début de réaction, le dibromoalcane engagé soit en concentration allant de 0,8 à 1,2 mole par litre de milieu réactionnel. A la fin de la réaction, il est recommandé de laisser le dibromure d'alkylène dimagnésium en solution à une concentration supérieure à 0,1 mole par litre, par exemple entre 0,1 et 1,2 mole par litre, et de ne pas essayer d'isoler le dibromure d'alkylène dimagnésium.

Le dibromoalcane de formule

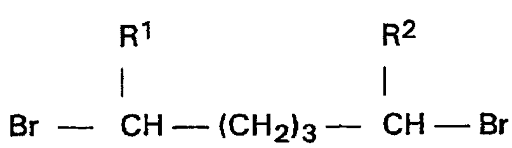

dans laquelle $R^1$ et $R^2$ ont les significations précédemment données peut être préparé par exemple par une première étape de formation d'un phosphite par réaction entre un diol de formule

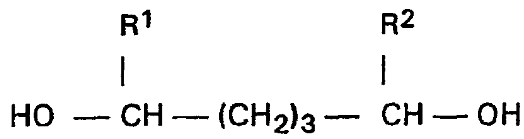

et le tribromure de phosphore $PBr_3$, de préférence en l'absence de solvant, dans des conditions permettant de contrôler la réaction et son maintien de préférence entre 40 et 70°C, selon le schéma :

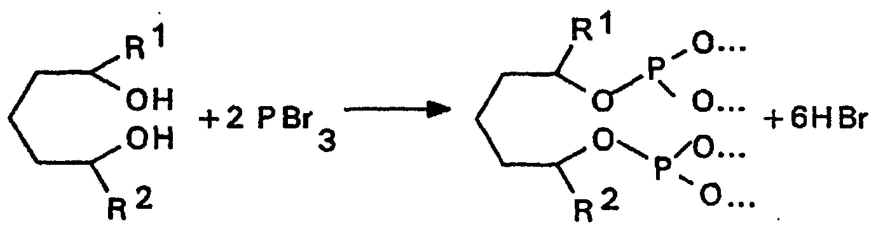

Pour cette réaction entre le diol et le $PBr_3$, les réactifs peuvent être engagés avec un rapport molaire $PBr_3$ / diol allant de préférence de 2 à 3.

Le phosphite ainsi formé se transforme dans une seconde étape, d'autant plus complètement en dibromoalcane que le milieu est riche en HBr. C'est la raison pour laquelle, bien que le milieu contienne déjà de l'HBr provenant de la réaction de formation du phosphite, il est recommandé, dans un premier temps, d'ajouter de l'HBr au milieu, par exemple en quantité telle que le rapport molaire de l'HBr ajouté sur le diol de départ aille de 2 à 3. Le milieu s'enrichit ainsi en dibromoalcane et en $P(OH)_3$. Jusqu'à la formation du dibromoalcane, le milieu est de préférence maintenu entre 40 et 70°C. De préférence, on attend que la réaction de la première étape soit fortement avancée (pouvant être appréciée par exemple par le fort affaiblissement voire la disparition des bandes infra-rouge -OH) pour accélérer la seconde étape par introduction d'HBr supplémentaire.

Quand la réaction est terminée, on peut soumettre le milieu à une hydrolyse en ajoutant un volume d'eau correspondant par exemple à 3 à 5 fois le volume du milieu réactionnel, suivi d'une extraction par un hydrocarbure tel que l'hexane, le cyclohexane ou le pentane. Après décantation, la phase organique est séparée et neutralisée par une base (par exemple : $NaHCO_3$ ou $Na_2\ CO_3$ ou $KHCO_3$) de façon à obtenir un pH allant de préférence de 7 à 8. La phase organique et ensuite de préférence séchée, par exemple par un sel anhydre pouvant s'hydrater (par exemple : $Mg\ SO_4$ ou $Na_2SO_4$). Après filtration, le solvant peut être évaporé, puis le dibromoalcane peut être isolé par distillation.

Le diol peut par exemple être préparé par réduction d'une dicétone de formule

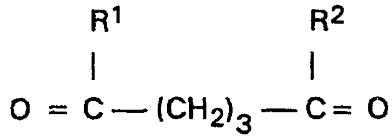

dans laquelle $R^1$ et $R^2$ ont les significations précédemment données, par un excès d'un agent réducteur tel que par exemple $[(CH_3OCH_2CH_2O)_2\ AlH_2]Na$ ou $LiAlH_4$ ou $NaBH_4$, de préférence en présence d'un solvant organique pouvant être un hydrocarbure aromatique comme le toluène ou un éther comme le THF ou le diéthyléther.

La nature du solvant pourra être choisie en fonction de son aptitude à solubiliser le réducteur. De préférence, le solvant est au minimum en quantité suffisante pour solubiliser entièrement toutes les espèces du milieu. La quantité maximale de solvant pourra de préférence être telle que la quantité de dicétone introduite au départ aille jusqu'à $1.10^{-2}$ mole par litre dans le milieu réactionnel. Pour cette réaction, les réactifs peuvent être introduits de façon à ce que le réducteur apporte un excès de fonctions réductrices, par exemple 50 à 150 % d'excès de fonctions réductrices, par rapport aux fonctions cétones à réduire sur la dicétone. Cette réaction de réduction peut être menée par exemple de 10°C à 50°C, le point d'ébullition du solvant pouvant cependant constituer une limite supérieure de température si la réaction est menée à la pression atmosphérique. A la suite de cette réaction, l'excès d'agent réducteur est décomposé par une base comme une solution aqueuse de soude, par exemple à 5 % de NaOH (prendre garde à l'exothermicité

de cette décomposition). On sépare ensuite la phase organique, puis on traite cette dernière par du gaz carbonique pour faire précipiter les sels dissous qu'elle contient. Ces derniers sont éliminés par filtration.

Enfin, le diol peut être isolé par évaporation du solvant, suivie, le cas échéant d'une ou plusieurs recristallisations dans un solvant hydrocarboné comme le cyclohexane.

Pour le cas où $R^1$ est identique à $R^2$, la dicétone peut par exemple être préparée par réaction entre le dichlorure de glutaryle et un organocuprate de formule

$$R_2^1CuM$$

dans laquelle $R^1$ a la signification précédemment donnée et M représente MgBr ou MgCl ou MgI ou Li. Cette réaction est de préférence réalisée sous atmosphère inerte comme sous azote ou argon, et à une température inférieure ou égale à -45°C, par exemple allant de -78°C à -45°C.

Cette réaction peut être menée de préférence de sorte que le rapport molaire de l'organocuprate sur le dichlorure de glutaryle aille de 1,5 à 4. De préférence, cette réaction est menée en présence d'un solvant, lequel peut être un mélange éther diéthylique / THF réalisé à partir de volumes égaux de ces deux solvants. La quantité de solvant peut être telle qu'en début de réaction, la concentration de l'organocuprate soit comprise entre $5.10^{-2}$ et 1 mole par litre. Après réaction, le mélange peut être hydrolysé, par exemple par une solution aqueuse saturée en $NH_4Cl$, puis extraite par un solvant organique comme l'éther diéthylique. La phase organique peut alors être lavée avec une solution aqueuse d'ammoniac 1 N jusqu'à élimination des sels de cuivre, ce qui est apprécié par la disparition de la coloration bleue des solutions ammoniacales de complexes cuivriques. Enfin, après séparation de la phase organique, la dicétone peut être isolée par évaporation du solvant.

L'organocuprate, s'il est de formule

$$R_2^1\ CuMgBr$$

peut être préparé par exemple par réaction entre un alkylmagnésium et le bromure cuivreux selon :

$$2R^1\ MgBr + CuBr \rightarrow R_2^1\ CuMgBr$$

Pour cette réaction, les réactifs sont de préférence introduits avec un rapport molaire de l'alkylmagnésien sur le bromure cuivreux compris entre 1,9 et 2,1. Pour cette réaction, un mélange équivolumique THF / étherdiéthylique est de préférence présent, par exemple en quantité telle qu'en début de réaction le bromure cuivreux soit introduit à raison de $5.10^{-2}$ à 1 mole par litre. La réaction peut être menée entre -78°C et -45°C.

Pour le cas où $R^1$ est un radical éthyle, la réaction est de préférence réalisée en présence de chlorure de lithium.

De préférence le chlorure de lithium est introduit en quantité sensiblement égale à la quantité introduite d'alkylmagnésium.

Lorsque $R^1$ est un autre radical que le radical éthyle, il est également possible d'utiliser la méthode décrite dans "Synthetic Procedures involving organocopper Reagents", B.H. Lipshutz, p. 283 dans Organometallics in Synthesis, M. Schlosser, Ed. John WILEY and Sons Chichester, New York, Brisbane, Toronto, Singapore, 1994.

Dans le cas des dicétones dissymétriques où $R^1$est différent de $R^2$ la méthode utilisée est celle préconisée par ABE, K ; OKAMURA, H., TSUGOSHI, T. NAKAMURA, N.; Synthesis, 1998, 231.

Dans les exemples qui suivent, le taux d'insolubles dans l'heptane (représenté par "HI") a été mesuré par extraction du polymère de la fraction soluble par l'heptane bouillant pendant deux heures dans un appareil de type Kumagawa.

## EXEMPLE 1

### 1. Préparation d'une solution de bromure d'éthylmagnésium dans l'éther diéthylique.

Dans un tétracol de 500 ml, sous atmosphère d'azote, muni d'un réfrigérant, d'une agitation mécanique, d'un thermomètre et d'une ampoule à introduction isobare, sont placés 5,70 g (235 mmol ; 1,1eq) de copeaux de magnésium que l'on recouvre de 15 ml d'éther diéthylique anhydre. On ajoute quelques gouttes de bromure d'éthyle pur pour démarrer la réaction, puis goutte à goutte on additionne le bromure d'éthyle restant (en tout 23,23 g ; 213 mmol ; 1eq), en solution dans 200 ml d'éther diéthylique anhydre. Pendant cette addition, le mélange réactionnel est maintenu à

une température avoisinant les 5°C. Quand l'addition est terminée, on laisse sous agitation à température ambiante pendant quatre heures jusqu'à disparition quasi-complète des copeaux de magnésium.

**2. Préparation d'une solution de bromure de diéthylcuprate magnésium dans un mélange THF - éther diéthylique.**

Dans un tétracol d'un litre, sous atmosphère d'azote, muni d'une agitation mécanique, d'un thermomètre basse température et d'une ampoule à introduction isobare, sont introduits 13,77 g (96 mmol ; 1 éq) de CuBr et 8,14 g (192 mmol ; 2 éq) de LiCl dans 240 ml de tétrahydrofurane (THF) anhydre sous agitation vigoureuse à 20°C. Après 5 minutes d'agitation à 20°C, la solution est refroidie à -50°C, puis la solution de bromure d'éthylmagnésium préalablement préparée (192 mmol ; 2 éq) est ajoutée goutte à goutte à -50°C. En début d'addition, la solution prend une coloration verte traduisant la formation du cuivreux intermédiaire, puis elle fonce régulièrement jusqu'à devenir violette, couleur du bromure de diéthylcuprate magnésium dans ce milieu. La solution est maintenue sous agitation pendant 2 heures à -50°C puis est refroidie à -78°C.

**3. Préparation de la nonane-3,7-dione**

A la solution de bromure de diéthylcuprate magnésium précédemment obtenue (96 mmol ; 2 éq) sont ajoutés 8,11 g (48 mmol ; 1 éq) de dichlorure de glutaryle pur goutte à goutte à -78°C. Quand l'addition est terminée, la température du mélange réactionnel est lentement (en 1 heure) ramenée à -45°C. L'agitation est maintenue pendant 2h30 à -45°C.

Le mélange est hydrolysé par 200 ml d'une solution saturée de $NH_4Cl$ puis il est filtré sur célite. La phase aqueuse est séparée de la phase organique, puis elle est extraite avec 3 fois 150 ml d'éther. Les extraits organiques sont rassemblés et lavés avec une solution aqueuse d'ammoniac 1N jusqu'à disparition totale de la coloration bleue. La phase organique est alors lavée par 50 ml d'eau, puis séchée sur $MgSO_4$ et le solvant est évaporé. On obtient ainsi 7,2 g de nonane—3,7 dione.

**4. Préparation du nonane-3,7-diol**

Dans un tétracol d'un litre, sous azote, muni d'une agitation magnétique, d'une ampoule à introduction isobare et d'un thermomètre, sont placés 27 ml (90 mmol ; 2 éq) de solution commerciale dite "Red-Al" (solution à 65 % de $[(MeOCH_2CH_2O)_2AlH_2]Na$ dans le toluène), dlués dans 200 ml de toluène anhydre. La nonane-3,7-dione (7 g ; 45 mmol ; 1 éq) est dissoute dans 260 ml de toluène anhydre puis additionnée goutte à goutte sur la solution de Red-Al sur une période d'environ une heure à température ambiante. La solution est laissée sous agitation à température ambiante pendant une heure supplémentaire.

Après refroidissement à l'aide d'un bain de glace, 15,5 ml d'une solution aqueuse de NaOH à 5 % sont ajoutés à la solution avec précaution car la neutralisation du Red-Al excédentaire est fortement exothermique. Elle est contrôlée par l'intensité du dégagement d'hydrogène. L'agitation est alors arrêtée et la phase aqueuse (chargée d'hydroxyde d'aluminium) décante au fond du tétracol. La phase aqueuse est séparée de la phase organique. La phase organique est alors versée sur 100 ml de toluène contenant un morceau de carboglace. Pendant l'agitation, un précipité salin est observé. La phase organique est chauffée à reflux jusqu'à l'arrêt de dégagement de $CO_2$ puis elle est filtrée. Le précipité est lavé avec 2 fois 5 ml de toluène. Les extraits organiques sont rassemblés et le solvant est évaporé à l'évaporateur rotatif.

Le nonane-3,7-diol est purifié par recristallisation dans le cyclohexane. Ses caractéristiques sont les suivantes :

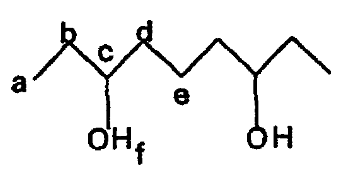

Température de fusion : 43°C
Infra-Rouge (cm-1) : ν(OH) : bande large entre 3100 et 3700
RMN $^1H$ (ppm) / $CDCl_3$(250 MHz) :
Ha : 0,90 t (6H)$^3J_{Ha-Hb}$ = 7,0 Hz
Hb + Hd + He : 1,30 - 1,65 m(10H)

Hf : 2,00 - 2,10 m large (2H)
Hc : 3,50 m (2H)

RMN $^{13}C$ (ppm) / $CDCl_3$(62 MHz) : la formation de deux diastéréoisomères thréo et méso est facilement repérée par la présence de deux types de carbones b, c, d et e.

| | |
|---|---|
| 1er diastéréoisomère : | Ca : 9,9<br>Ce : 21,5<br>Cb : 30,1<br>Cd : 36,5<br>Cc : 72,9 |
| 2ème diastéréoisomère : | Ca : 9,9<br>Ce : 21,7<br>Cb : 30,2<br>Cd : 36,7<br>Cc : 73,1 |

**5. Préparation du 3,7-dibromononane**

Dans un tétracol de 100 ml, sous azote, muni d'un thermomètre, d'une agitation magnétique et d'une ampoule à introduction isobare, sont placés 5,62 g (35 mmol ; 1 éq) de nonane-3,7-diol. On ajoute ensuite goutte à goutte 7,3 ml (77 mmol ; 2,2 éq) de $PBr_3$ à température ambiante. La réaction est exothermique et le mélange réactionnel s'échauffe jusqu'à 30-35°C puis redescend à température ambiante. Le mélange est alors chauffé 4 heures à 60°C et est laissé 15 heures sous agitation à température ambiante.

Il est ensuite chauffé à 60°C pendant 5 heures sous barbotage d'acide bromhydrique HBr.

Le mélange réactionnel est versé sur 50 g de glace puis la phase organique est séparée de la phase aqueuse. La phase aqueuse est extraite avec 3 fois 20 ml d'hexane. Les extraits organiques sont rassemblés, lavés avec une solution saturée de $NaHCO_3$, jusqu'à l'obtention d'un pH supérieur à 7, puis avec 20 ml d'eau. La phase organique est séchée sur $MgSO_4$ et le solvant est évaporé à l'évaporateur rotatif. Le 3,7-dibromononane est purifié par distillation sous pression réduite (ébullition à 76-82°C sous 0,3 mmHg).

**6. Préparation d'une solution de 3,7-dibromure de nonylmagnésium dans l'éther diéthylique**

Dans un tétracol de 100 ml, sous azote, muni d'un réfrigérant, d'une agitation mécanique, d'un thermomètre et d'une ampoule à introduction isobare, sont placés 1,16 g (48 mmol ; 2,25 éq) de magnésium en poudre juste recouvert d'éther diéthylique anhydre. Pour activer le magnésium, quelques gouttes de 1,2-dibromoéthane et de 3,7-dibromononane purs sont ajoutées. Quand la réaction a démarré (l'appréciation du démarrage est facilitée par un test positif à la cétone de Michler) 6,05 g (21 mmol ; 1 éq) de 3,7-dibromononane dilué dans 20 ml d'éther diéthylique anhydre sont ajoutés goutte à goutte immédiatement sans aucun refroidissement du milieu réactionnel. Le mélange est laissé sous agitation à température ambiante pendant 4 h après la fin de l'ajout.

**7. Préparation du 1,1-diméthoxy-2,6-diéthylsilacyclohexane**

Dans un tétracol de 250 ml, sous azote, muni d'un réfrigérant, d'une agitation magnétique, d'un thermomètre et d'une ampoule à introduction isobare, sont placés 2,91 g (19,2 millimoles ; 0,9 éq) de tétraméthoxysilane dans 20 ml d'éther diéthylique anhydre. On ajoute ensuite la solution éthérée de 3,7-dibromure de nonylmagnésium, précédemment préparée goutte à goutte à température ambiante, puis la solution est portée à reflux pendant 4 heures.

Le mélange obtenu est filtré sous azote, puis centrifugé pour enlever une partie des sels de magnésium formés. L'éther est ensuite évaporé à l'évaporateur rotatif à 30°C. On ajoute ensuite 10 ml d'éther et la solution est alors agitée puis centrifugée, ceci dans le but de parfaire l'élimination des sels de magnésium résiduels. Le liquide surnageant obtenu est ensuite soumis à une première distillation rapide sous vide partiel (0,3 mm Hg), le distillat étant piégé dans un tube plongé dans l'azote liquide. On constate qu'une première fraction distille vers 28°C et que le reste distille entre 40°C et 120°C sans observer de point fixe. La fraction ayant distillé vers 28°C comprend essentiellement un ou plusieurs produits secondaires d'élimination renfermant au moins une double liaison éthylénique. L'autre fraction est redistillée sous pression réduite ($2.10^{-2}$ mm Hg) avec un montage de microdistillation, les différentes fractions étant piégées dans des tubes plongés dans l'azote liquide. Les trois fractions suivantes sont obtenues :

fraction 1 : 42-48°C,
fraction 2 : 50-57°C,
fraction 3 : 58-104°C.

Les fractions 1 et 2 sont des mélanges à environ 95 % des diastéréoisomères thréo et méso du 2,6-diéthyl-1,1diméthoxysilacyclohexane. La fraction 1 (480 mg) est un mélange à 91/9 de thréo/méso (déterminé par chromatographie en phase vapeur). La fraction 2 (940 mg) est un mélange à 82/12 de thréo/méso (déterminé par chromatographie en phase vapeur). Les caractéristiques RMN du stéréoisomère majoritaire thréo du 2,6-diéthyl-1,1-diméthoxysilacyclohexane déterminées à partir de la fraction 1 sont les suivantes :

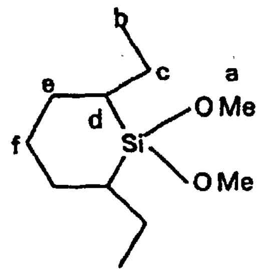

RMN $^1H$ (ppm) / $CDCl_3$ (250 MHz) :

Hd : 0,70-0,90 m (2H)
Hb : 0,90 t (6H) $^3J_{Hb-Hc}$ = 7,5 Hz
Hc : 1,20-1,35 et 1,50-1,65 deux multiplets (4H)
Hf : 1,35-1,45 m (2H)
He : 1,50-1,60 et 1,70-1,75 deux multiplets (4H)
Ha : 3,55 s (6H)

RMN $^{13}C$ (ppm) / $CDCl_3$ (62 MHz) :

Cb : 13,3
Cc : 21,6
Cf : 23,2
Cd : 24,7
Ce : 30,1
Ca : 50,6

**EXEMPLE 2**

Dans un réacteur en acier inoxydable de 3,6 litres muni d'un système d'agitation et d'une régulation de température, on introduit après purge du réacteur à l'azote, 5,7 Nl d'hydrogène, puis 2,4 litres de propylène liquide, puis 30 millimoles de triéthylaluminium sous la forme d'une solution dans l'hexane à 1,5 mole / litre, puis 1,5 millimoles de 1,1diméthoxy-2,6-diéthylsilacyclohexane sous la forme d'une solution dans l'hexane à 0,2 mole par litre (obtention d'un rapport molaire Al/Si de 20). On introduit ensuite, sous agitation, 40 mg d'une composante catalytique solide préparée comme dans l'exemple 12 du brevet US 5,212,132, puis la température du réacteur est portée à 70°C en 10 minutes et maintenue une heure à cette température. Le réacteur est ensuite refroidi et décomprimé. Un polypropylène d'indice d'insolubilité dans l'heptane de 98,8 a été obtenu avec une productivité de 52 000 g de polymère par g de composante catalytique solide.

**EXEMPLE 3 (comparatif)**

On procède comme pour l'exemple 2 sauf que l'on remplace le 1,1-diméthoxy-2,6-diéthylsilacyclohexane par le même nombre de moles de 1,1-diméthoxy-2-éthylsilacyclohexane.
Un polypropylène d'indice d'insolubilité dans l'heptane de 97,9 a été obtenu avec une productivité de 40 000 g de polymère par g de composante catalytique solide.

## Revendications

**1.** Procédé de polymérisation d'au moins une oléfine en présence d'un catalyseur et d'un dialcoxysilacyclohexane de formule

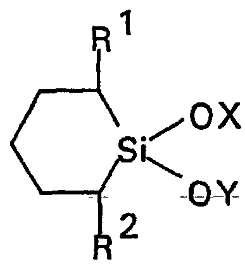

(1)

dans laquelle $R^1$ et $R^2$ pouvant être identiques ou différents représentent des radicaux alkyle comprenant 1 à 5 atomes de carbone, et X et Y, pouvant être identiques ou différents, sont des radicaux alkyle comprenant 1 à 6 atomes de carbone.

**2.** Procédé selon la revendication précédente **caractérisé en ce que** au - moins un radical parmi $R^1$ et $R^2$ est un radical éthyle.

**3.** Procédé selon la revendication précédente **caractérisé en ce que** $R^1$ et $R^2$ sont tous deux des radicaux éthyle.

**4.** Procédé selon la revendication précédente **caractérisé en ce que** le dialcoxysilacyclohexane est le 1,1-diméthoxy-2,6-diéthylsilacyclohexane.

**5.** Procédé selon l'une des revendications précédentes **caractérisé en ce que** le catalyseur comprend une composante catalytique solide comprenant un composé d'un métal de transition.

**6.** Procédé selon la revendication précédente **caractérisé en ce que** la composante catalytique solide se présente sous la forme d'un complexe comprenant au moins les éléments Mg, Ti, Cl.

**7.** Procédé selon l'une des revendications 5 à 6 **caractérisé en ce que** le catalyseur comprend un composé organique de l'aluminium en tant que cocatalyseur.

**8.** Procédé selon l'une des revendications précédentes **caractérisé en ce que** le dialcoxysilacyclohexane est introduit dans le milieu de polymérisation à raison de $1.10^{-4}$ à 0,2 millimole par mole d'oléfine à polymériser.

**9.** Procédé selon l'une des revendications précédentes **caractérisé en ce que** le dialcoxysilacyclohexane joue le rôle de donneur externe d'électron.

**10.** Procédé selon l'une des revendications 1 à 8 **caractérisé en ce que** le dialcoxysilacyclohexane joue le rôle de donneur interne d'électron.

**11.** Procédé selon l'une des revendications précédentes **caractérisé en ce que** au moins une oléfine est le propylène.

**12.** Dialcoxysilacyclohexane de formule

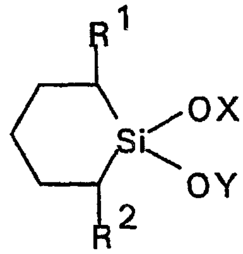

(1)

dans laquelle $R^1$ et $R^2$ pouvant être identiques ou différents représentent des radicaux alkyle comprenant 1 à 5 atomes de carbone, et X et Y, pouvant être identiques ou différents, sont des radicaux alkyle comprenant 1 à 6 atomes de carbone.

**13.** Dialcoxysilacyclohexane selon la revendication 12 **caractérisé en ce que** $R^1$ et $R^2$ sont tous deux des radicaux éthyle.

**14.** 1,1-diméthoxy-2,6-diéthylsilacyclohexane.

**15.** Procédé de préparation d'un dialcoxysilacyclohexane selon la revendication 12, comprenant une étape de réaction entre une étape de réaction entre un dibromure d'alkylène dimagnésium de formule

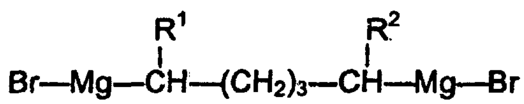

,

avec un tétraalcoxysilane de formule $(OR^a)(OR^b)(OR^c)(OR^d)Si$, dans laquelle $R^a$, $R^b$, $R^c$ et $R^d$ sont choisis dans la même famille que X et Y, l'un au moins des radicaux $R^a$, $R^b$, $R^c$ et $R^d$ étant identique à X, et l'un au moins des radicaux $R^a$, $R^b$, $R^c$ et $R^d$ étant identique à Y, dans laquelle $R^1$ et $R^2$ pouvant être identiques ou différents, sont des radicaux alkyle comprenant 1 à 5 atomes de carbone et où X et Y, pouvant être identiques ou différents, sont des radicaux alkyle comprenant 1 à 6 atomes de carbone.

**16.** Procédé selon la revendication précédente **caractérisé en ce que** le dibromure d'alkylène dimagnésium est préparé par un procédé comprenant une étape de réaction entre un dibromoalcane de formule

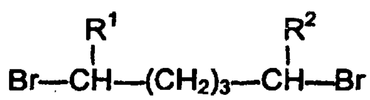

,

et du magnésium.

**Patentansprüche**

**1.** Verfahren zum Polymerisieren von mindestens einem Olefin in Anwesenheit eines Katalysators und eines Dialkoxysilacyclohexans der Formel

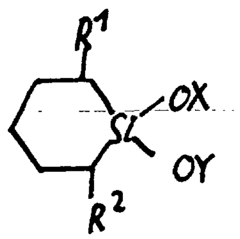

(1)

wobei $R^1$ und $R^2$ identisch oder unterschiedlich sein können, Alkylreste darstellend, enthaltend 1 bis 5 Kohlenstoffatome, und X und Y können identisch oder unterschiedlich sein, sind Alkylreste, enthaltend 1 bis 6 Kohlenstoffatome.

**2.** Verfahren nach dem vorhergehenden Anspruch, **dadurch gekennzeichnet, daß** mindestens ein Rest von $R^1$ und $R^2$ ein Ethylrest ist.

**3.** Verfahren nach dem vorhergehenden Anspruch, **dadurch gekennzeichnet, daß** $R^1$ und $R^2$ alle beide Ethylreste sind.

**4.** Verfahren nach dem vorhergehenden Anspruch, **dadurch gekennzeichnet, daß** das Dialkoxysilacyclohexan das 1,1-Dimethoxy-2,6-diethylsilacyclohexan ist.

**5.** Verfahren nach einem der vorhergehenden Ansprüche, **dadurch gekennzeichnet, daß** der Katalysator eine katalytische Feststoffkomponente, umfassend eine Verbindung eines Übergangsmetalls, umfaßt.

**6.** Verfahren nach dem vorhergehenden Anspruch, **dadurch gekennzeichnet, daß** die katalytische Feststoffkomponente in der Form eines Komplexes, umfassend mindestens die Elemente Mg, Ti, Cl, vorliegt.

**7.** Verfahren nach einem von Ansprüchen 5 bis 6, **dadurch gekennzeichnet, daß** der Katalysator eine organische Verbindung des Aluminiums als Cokatalysator umfaßt.

**8.** Verfahren nach einem der vorhergehenden Ansprüche, **dadurch gekennzeichnet, daß** das Dialkoxysilacyclohexan in das Polymerisationsmedium in einem Verhältnis von 1. $10^{-4}$ bis 0,2 Millimol pro Mol Olefin zum Polymerisieren eingeführt wird.

**9.** Verfahren nach einem der vorhergehenden Ansprüche, **dadurch gekennzeichnet, daß** das Dialkoxysilacyclohexan die Rolle des äußeren Elektronendonors spielt.

**10.** Verfahren nach einem der Ansprüche 1 bis 8, **dadurch gekennzeichnet, daß** das Dialkoxysilacyclohexan die Rolle des inneren Eektronendonors spielt.

**11.** Verfahren nach einem der vorhergehenden Ansprüche, **dadurch gekennzeichnet, daß** mindestens ein Olefin das Propylen ist.

**12.** Dialkoxysilacyclohexan der Formel

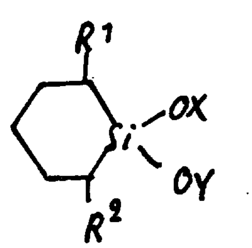

(1)

wobei $R^1$ und $R^2$ identisch oder unterschiedlich sein können, Alkylreste, umfassend 1 bis 5 Kohlenstoffatome, darstellend, und X und Y können identisch oder unterschiedlich sein, sind Alkylreste, umfassend 1 bis 6 Kohlenstoffatome.

**13.** Dialkoxysilacyclohexan nach Anspruch 12, **dadurch gekennzeichnet, daß** $R^1$ und $R^2$ alle beide Ethylreste sind.

**14.** 1,1-Dimethoxy-2,6-diethylsilacyclohexan.

**15.** Verfahren zur Herstellung eines Dialkoxysilacyclohexans nach Anspruch 12, umfassend eine Reaktionsstufe zwischen einer Reaktionsstufe zwischen einem Dibromid von Alkyldimagnesium der Formel

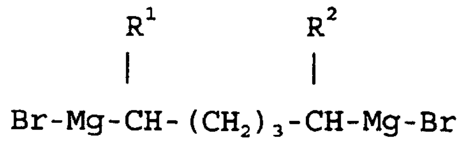

mit einem Tetraalkoxysilan der Formel $(OR^a)(OR^b)(OR^c)(OR^d)Si$, wobei $R^a$, $R^b$, $R^c$ und $R^d$ ausgewählt sind aus der gleichen Familie wie X und Y, mindestens einer der Reste $R^a$, $R^b$, $R^c$ und $R^d$ ist identisch mit X, und mindestens einer der Reste $R^a$, $R^b$, $R^c$ und $R^d$ ist identisch mit Y, wobei $R^1$ und $R^2$ identisch oder unterschiedlich sein können, Alkylreste sind, umfasend 1 bis 5 Kohlenstoffatome, und oder X und Y können identisch oder unterschiedlich sein, sind Alkylreste, umfassend 1 bis 6 Kohlenstoffatome.

**16.** Verfahren nach dem vorhergehenden Anspruch, **dadurch gekennzeichnet, daß** das Dibromid von Alkyldimagnesium hergestellt wird durch ein Verfahren, umfassend eine Reaktionsstufe zwischen einem Dibromalkan der Formel

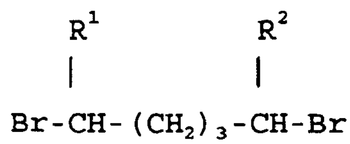

und Magnesium.

## Claims

**1.** Method for polymerising at least one olefin in the presence of a catalyst and of a dialcoxysilacyclohexane having the formula

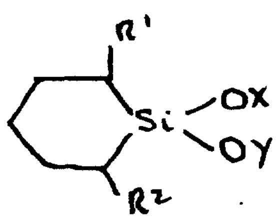

(1)

in which $R^1$ and $R^2$, which may be the same or different, stand for alkyl radicals having 1 to 5 carbon atoms, and X and Y, which may be the same or different, are alkyl radicals having 1 to 6 carbon atoms.

**2.** Method according to the preceding claim, **characterised in that** at least one radical selected from $R^1$ and $R^2$ is an ethyl radical.

**3.** Method according to the preceding claim, **characterised in that** $R^1$ and $R^2$ are both ethyl radicals.

**4.** Method according to the preceding claim, **characterised in that** the dialcoxysilacyclohexane is 1,1-dimethoxy-2,6-diethylsilacyclohexane.

**5.** Method according to any of the preceding claims, **characterised in that** the catalyst features a solid catalytic component that includes a transition metal compound.

**6.** Method according to the preceding claim, **characterised in that** the solid catalytic component is in the form of a complex that includes at least the elements Mg, Ti and Cl.

**7.** Method according to either of claims 5 and 6, **characterised in that** the catalyst features an organic aluminium compound as co-catalyst.

**8.** Method according to any of the preceding claims, **characterised in that** the dialcoxysilacyclohexane is introduced Into the polymerisation medium at a rate of $1.10^{-4}$ to 0.2 millimole per mole of olefin to be polymerised.

**9.** Method according to any of the preceding claims, **characterised in that** the dialcoxysilacyclohexane acts as an external electron donor.

**10.** Method according to any of claims 1 to 18, **characterised in that** the dialcoxysilacyclohexane acts as an internal electron donor.

**11.** Method according to any of the preceding claims, **characterised in that** at least one olefin is propylene.

**12.** Dialcoxysilacyclohexane having the formula

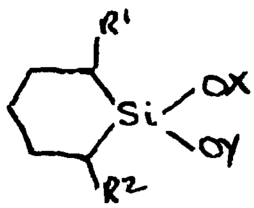 (1)

in which $R^1$ and $R^2$, which may be the same or different, stand for alkyl radicals having 1 to 5 carbon atoms, and X and Y, which may be the same or different, are alkyl radicals having 1 to 6 carbon atoms.

**13.** The dialcoxysilacyclohexane according to claim 12, **characterised in that** $R^1$ and $R^2$ are both ethyl radicals.

**14.** 1,1-dimethoxy-2,6-diethylsilacycloheane.

**15.** Method for preparing a dialcoxysilacyclohexane according to claim 12, comprising a reaction stage between a dimagnesium alkylene dibromide having the formulae

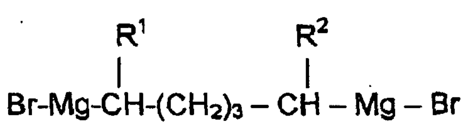 ,

with a tetraalcoxysilane of formula $(OR^a)(OR^b)(OR^c)(OR^d)Si$, in which $R^a$, $R^b$, $R^c$ and $R^d$ are taken from the same family as X and Y, at least one of the radicals $R^a$, $R^b$, $R^c$ and $R^d$ being identical to X, and at least one of the radicals $R^a$, $R^b$, $R^c$ and $R^d$ being identical to Y, where $R^1$ and $R^2$, which may be the same or different, are alkyl radicals having 1 to 5 carbon atoms and where X and Y, which may be the same or different, are alkyl radicals having 1 to 6 carbon atoms.

**16.** Method according to the preceding claim, **characterised in that** the dimagnesium alkylene dibromide is prepared

by a method comprising a reaction stage between a dibromoalcane having the formula

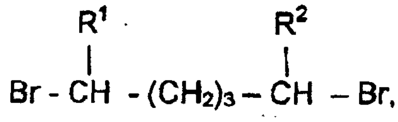

and magnesium.